# EUROPÄISCHE PATENTSCHRIFT

(11) **EP 3 056 362 B1**
(45) Veröffentlichungstag und Bekanntmachung des Hinweises auf die Patenterteilung: **14.09.2022**
(21) Anmeldenummer: 16000273.9
(22) Anmeldetag: 04.02.2016
(51) Int. Cl.: B60C 23/20, B60C 23/04, B60C 29/06, F16K 15/20, F16K 37/00

(54) **VERFAHREN UND VORRICHTUNG ZUR UNTERSTÜTZUNG EINES FAHRERS EINES FAHRZEUGS, INSBESONDERE EINES NUTZFAHRZEUGS**
DEVICE AND METHOD FOR SUPPORTING A DRIVER OF A VEHICLE, IN PARTICULAR A COMMERCIAL VEHICLE
PROCÉDÉ ET DISPOSITIF D'ASSISTANCE D'UN CONDUCTEUR DE VÉHICULE AUTOMOBILE, EN PARTICULIER D'UN VÉHICULE UTILITAIRE

(30) Priorität: 12.02.2015 DE 102015001803
(43) Veröffentlichungstag der Anmeldung: 17.08.2016
(60) Teilanmeldung: 22186860.7
(73) Patentinhaber: MAN Truck & Bus SE, 80995 München (DE)
(72) Erfinder: Schneider, Bernhard, 85253 Erdweg (DE)
(74) Vertreter: Liebl, Thomas

(56) Entgegenhaltungen:
- EP-A1- 0 301 443
- EP-A1- 1 544 002
- JP-A- 2005 186 658
- US-A- 6 148 888
- US-A1- 2007 044 552
- US-B1- 6 167 900

## Beschreibung

Die Erfindung betrifft ein Verfahren zur Unterstützung eines Fahrers eines Fahrzeugs, insbesondere eines Nutzfahrzeugs, nach dem Oberbegriff des Patentanspruches 1, eine Vorrichtung zur Unterstützung eines Fahrers eines Fahrzeugs, insbesondere eines Nutzfahrzeugs nach dem Oberbegriff des Patentanspruches 6, ein Luftventil nach Patentanspruch 16 und ein Fahrzeug, insbesondere ein Nutzfahrzeug, nach Patentanspruch 17.

Bei Fahrzeugen, insbesondere bei Nutzfahrzeugen, können sich während einer Fahrt Fahrzeugreifen gegebenenfalls so stark erwärmen, dass sie in Brand geraten. Die Ursache für eine derartige Erwärmung ist häufig ein zu geringer Luftdruck in einem als Luftreifen ausgebildeten Fahrzeugreifen, wodurch die Verformung bzw. das Walken des Fahrzeugreifens während der Fahrt deutlich erhöht ist. Dabei reicht regelmäßig schon ein schleichender Druckverlust des Fahrzeugreifens aus, um die Walkbewegung des Fahrzeugreifens auf ein kritisches Maß zu erhöhen. Die Entzündung von Fahrzeugreifen ist insbesondere bei Gefahrguttransporten gefährlich, da es hier beispielsweise auch zu einem Tankbrand oder zu einem Entzünden der Ladung kommen kann.

Um das Entzünden eines Fahrzeugreifens zu verhindern, ist es bekannt, die Temperatur des Fahrzeugreifens während der Fahrt mit dem Fahrzeug durchgängig zu messen. Hierzu wird üblicherweise ein Temperatursensor in einem mit Luft gefüllten Hohlraum eines als Luftreifens ausgebildeten Fahrzeugreifens angeordnet. Dem Temperatursensor ist dann eine Sendeeinrichtung zugeordnet, mittels der das Messsignal des Temperatursensors an eine Anzeigeeinrichtung des Fahrzeugs übermittelt wird, die dem Fahrer des Fahrzeugs Informationen über den Zustand des Fahrzeugreifens anzeigt. Mit Hilfe dieser Informationen kann der Fahrer des Fahrzeugs dann geeignete Maßnahmen einleiten, um ein Entzünden des Fahrzeugreifens zu verhindern.

Ein derartiges System ist beispielsweise aus der DE 102 36 140 A1 bekannt, die eine Vorrichtung zum Messen der Lufttemperatur eines Reifens offenbart, bei der ein an einer Radfelge des Reifens anbringbares Reifenventil mit einer Aufnahme für einen Messwertgeber verbunden ist. Im an der Radfelge angebrachten Zustand des Reifenventils befindet sich die Aufnahme in einem Hohlraum des als Luftreifen ausgebildeten Reifens, so dass mittels des wenigstens eines Messwertgebers die Lufttemperatur im Hohlraum des Reifens gemessen werden kann. Die Messwerte werden dann an einem im Fahrzeuginnenraum angeordneten Empfänger weitergeleitet und dem Fahrer des Fahrzeugs angezeigt. Bei Über- bzw. Unterschreiten eines kritischen Werts wird zudem ein entsprechendes Signal erzeugt.

Eine gattungsgemäße Vorrichtung ist aus der EP1544002 A1 bekannt. US6167900 B1 zeigt ein Luftventil gemäß dem Oberbegriff des Anspruchs 16. Weiterhin zeigen JP2005186658 A und US6148888 Luftventile mit integriertem Temperatursensor.

Aufgabe der Erfindung ist es, ein Verfahren und eine Vorrichtung zur Unterstützung eines Fahrers eines Fahrzeugs, insbesondere eines Nutzfahrzeugs, bereitzustellen, mittels denen eine Entzündung des Fahrzeugreifens besonders zuverlässig verhindert werden kann. Diese Aufgabe wird durch die Merkmale der unabhängigen Ansprüche gelöst. Bevorzugte Weiterbildungen sind in den Unteransprüchen offenbart.

Gemäß Patentanspruch 1 wird ein Verfahren zur Unterstützung eines Fahrers eines Fahrzeugs, insbesondere eines Nutzfahrzeugs, vorgeschlagen, wobei das Fahrzeug wenigstens einen, insbesondere als Luftreifen ausgebildeten, Fahrzeugreifen aufweist, und wobei wenigstens ein Temperatursensor vorgesehen ist, mittels dem eine Temperatur des Fahrzeugreifens gemessen werden kann. Das Fahrzeug weist zudem eine, insbesondere visuelle und/oder akustische, Anzeigeeinrichtung auf, mittels der dem Fahrer des Fahrzeugs Informationen über den Zustand des Fahrzeugreifens angezeigt werden können. Weiter weist das Fahrzeug auch eine signalübertragend mit dem Temperatursensor verbundene Regel- und/oder Steuereinrichtung auf, mittels der die Anzeige der Anzeigeeinrichtung gesteuert und/oder geregelt werden kann. Erfindungsgemäß kann die Regel- und/oder Steuereinrichtung in mehrere Warnstufen geschaltet werden. Sofern dabei wenigstens ein mittels des Temperatursensors gemessener Temperaturwert einen ersten definierten Grenzwert überschreitet, schaltet die Regel- und/oder Steuereinrichtung selbsttätig bzw. automatisch in eine erste Warnstufe, in der dem Fahrer mittels der Anzeigeeinrichtung angezeigt wird, dass er das Fahrzeug innerhalb eines definierten Zeitraums und/oder innerhalb eines definierten Fahrstreckenabschnitts anhalten und/oder dass er einen definierten Geschwindigkeits-Wert mit dem Fahrzeug nicht überschreiten soll. Sofern der gemessene Temperaturwert einen größer als der erste Grenzwert ausgebildeten, zweiten definierten Grenzwert überschreitet, schaltet die Regel- und/oder Steuereinrichtung selbsttätig bzw. automatisch in eine zweite Warnstufe, in der dem Fahrer mittels der Anzeigeeinrichtung angezeigt wird, dass er das Fahrzeug sofort anhalten soll.

Auf diese Weise wird eine zu starke Erwärmung des Fahrzeugreifens und damit die Gefahr einer eventuellen Entzündung des Reifens besonders zuverlässig verhindert, da der Fahrer mittels der ersten Warnstufe bereits frühzeitig davor gewarnt wird, dass der Zustand des Fahrzeugreifens in Zukunft kritisch bzw. gefährlich sein kann. Der Fahrer kann dann rechtzeitig geeignete Maßnahmen treffen, um den kritischen Zustand des Fahrzeugreifens und somit eine gefährliche Verkehrssituation zu verhindern. Wird dem Fahrer beispielsweise angezeigt, dass er das Fahrzeug innerhalb eines definierten Zeitraums und/oder innerhalb eines definierten Fahrstreckenabschnitts anhalten soll, kann er beispielsweise noch einen geeigneten Ort, beispielsweise einen Rastplatz oder dergleichen, anfahren, an dem er sein Fahrzeug gefahrlos anhalten und den Fahrzeugreifen abkühlen lassen kann. Gegebenenfalls kann der Fahrzeugreifen auch an einem geeigneten Ort ausgewechselt werden. Wird dem Fahrer beispielsweise angezeigt, dass er einen definierten Geschwindigkeits-Wert mit dem Fahrzeug nicht überschreiten soll, kann der Fahrer die Fahrzeuggeschwindigkeit zur Einhaltung des Geschwindigkeits-Werts verringern und somit gegebenenfalls eine Abkühlung des Fahrzeugreifens bewirken. Die Anzeige kann dabei beispielsweise mittels eines dauerhaften oder blinkenden visuellen Warnsignals erfolgen. Sofern der Zustand des Fahrzeugreifens jedoch bereits kritisch bzw. gefährlich ist, wird dies dem Fahrer mittels der zweiten Warnstufe angezeigt. Der Fahrer weiß dann, dass er das Fahrzeug unverzüglich anhalten muss, um eine Entzündung des Fahrzeugreifens zu verhindern.

Der wenigstens eine mittels des Temperatursensors gemessene Temperaturwert ist dabei vorzugsweise die aktuell mittels des Temperatursensors gemessene Temperatur. Ebenso kann der wenigstens eine mittels des Temperatursensors gemessene Temperaturwert aber auch mehrere mittels des Temperatursensors gemessene Temperaturwerte umfassen, wodurch sich ein Temperaturverlauf ergibt. Der definierte Grenzwert ist dabei stets derart korrespondierend zu dem wenigstens einen gemessenen Temperaturwert ausgebildet, dass eine Entzündung des Fahrzeugreifens zuverlässig verhindert wird.

In einer bevorzugten Verfahrensführung schaltet die Regel- und/oder Steuereinrichtung, sofern der gemessene Temperaturwert den ersten Grenzwert nicht überschreitet, selbsttätig bzw. automatisch in einen Grundmodus, in dem dem Fahrer mittels der Anzeigeeinrichtung keine Information zu dem Zustand des Fahrzeugreifens angezeigt werden. So werden dem Fahrer lediglich dann Informationen zu dem Zustand des Fahrzeugreifens angezeigt, wenn dies auch erforderlich ist, und oder vom Fahrer zur Anzeige aktiviert wird. Somit wird eine Ablenkung des Fahrers während einer Fahrt mit dem Fahrzeug deutlich verringert.

Weiter bevorzugt ist die Regel- und/oder Steuereinrichtung signalübertragend mit einer Geschwindigkeitsregelanlage des Fahrzeugs verbunden. Sofern dann die aktuelle Fahrzeuggeschwindigkeit größer ist als der definierte Geschwindigkeits-Wert, wird die Fahrzeuggeschwindigkeit mittels der Geschwindigkeitsregelanlage selbsttätig derart geregelt und/oder gesteuert, dass das Fahrzeug den definierten Geschwindigkeits-Wert nicht überschreitet. So kann zuverlässig und einfach sichergestellt werden, dass der definierte Geschwindigkeits-Wert nicht überschritten wird.

Bevorzugt weist die Regel- und/oder Steuereinrichtung eine Prognostiziereinrichtung auf, mittels der eine zukünftige Temperaturentwicklung des Fahrzeugreifens in Abhängigkeit von wenigstens einem Reifentemperaturparameter prognostiziert bzw. vorhergesagt werden kann. Der definierte Zeitraum und/oder der definierte Fahrstreckenabschnitt kann dann über diese prognostizierte Temperaturentwicklung des Fahrzeugreifens mittels der Regel- und/oder Steuereinrichtung ermittelt werden. Auf diese Weise kann in Abhängigkeit von dem wenigstens einen Reifentemperaturparameter stets ein optimaler Zeitraum bzw. Fahrstreckenabschnitt ermittelt werden. Ein optimaler Zeitraum bzw. Fahrstreckenabschnitt kann dabei beispielsweise derart ausgebildet sein, dass der Fahrer noch möglichst lange bzw. weit fahren kann, ohne eine Entzündung des Fahrzeugreifens zu riskieren. Alternativ und/oder zusätzlich zu der Prognostiziereinrichtung können aber auch definiert voreingestellte Werte für den definierten Zeitraum und/oder für den definierten Fahrstreckenabschnitt in der Regel- und/oder Steuereinrichtung hinterlegt bzw. gespeichert sein. Vorzugsweise ist der wenigstens eine Reifentemperaturparameter durch wenigstens einen mittels des Temperatursensors gemessenen Temperaturwert und/oder durch die aktuelle und/oder zukünftige Verkehrssituation des Fahrzeugs gebildet. Mittels derart ausgebildeter Reifentemperaturparameter kann der definierte Zeitraum und/oder der definierte Fahrstreckenabschnitt besonders zuverlässig und mit hoher Genauigkeit ermittelt werden.

Weiter bevorzugt ist die Regel- und/oder Steuereinrichtung signalübertragend mit einem Navigationssystem des Fahrzeugs verbunden. Dadurch können beispielsweise Daten zur aktuellen und/oder zukünftigen Verkehrssituation des Fahrzeugs an die Regel- und/oder Steuereinrichtung übermittelt werden. Bevorzugt ist dabei vorgesehen, dass die Routenplanung des Navigationssystems unter Berücksichtigung des definierten Zeitraums und/oder des definierten Fahrstreckenabschnitts selbsttätig bzw. automatisch mittels der Regel- und/oder Steuereinrichtung geändert wird. Auf diese Weise kann der Fahrer des Fahrzeugs mittels der geänderten Routenplanung beispielsweise an einen Ort geführt werden, an dem er das Fahrzeug gefahrlos anhalten kann. Durch die selbsttätige Änderung der Routenplanung wird die Entzündung des Fahrzeugreifens somit besonders zuverlässig und komfortabel verhindert. Bevorzugt wird, sofern die Regel- und/oder Steuereinrichtung kein Signal des wenigstens einen Temperatursensors empfängt, mittels der Anzeigeeinrichtung ein Warnsignal angezeigt. So wird der Fahrer zuverlässig darüber informiert, dass wenigstens ein zu messender Temperaturwert nicht an die Regel- und/oder Steuereinrichtung übermittelt wird. Vorzugsweise wird das Warnsignal dabei durch eine sogenannte Check-Control-Meldung gebildet.

Zur Lösung der genannten Aufgabe wird ferner eine Vorrichtung zur Unterstützung eines Fahrers eines Fahrzeugs, insbesondere eines Nutzfahrzeugs, vorgeschlagen, wobei Z die Vorrichtung wenigstens einen, insbesondere als Luftreifen ausgebildeten, Fahrzeugreifen aufweist, und wobei wenigstens ein Temperatursensor vorgesehen ist, mittels dem eine Temperatur des Fahrzeugreifens gemessen werden kann. Die Vorrichtung weist zudem eine, insbesondere visuelle und/oder akustische, Anzeigeeinrichtung auf, mittels der dem Fahrer des Fahrzeugs Informationen über den Zustand des Fahrzeugreifens angezeigt werden können. Weiter weist die Vorrichtung auch eine signalübertragend mit dem Temperatursensor verbundene Regel- und/oder Steuereinrichtung auf, mittels der die Anzeige der Anzeigeeinrichtung gesteuert und/oder geregelt werden kann. Erfindungsgemäß kann die Regel- und/oder Steuereinrichtung in mehrere Warnstufen geschaltet werden. Sofern dabei wenigstens ein, mittels des Temperatursensors gemessener Temperaturwert einen ersten definierten Grenzwert überschreitet, kann die Regel- und/oder Steuereinrichtung selbsttätig bzw. automatisch in eine erste Warnstufe geschaltet werden, in der dem Fahrer mittels der Anzeigeeinrichtung angezeigt werden kann, dass er das Fahrzeug innerhalb eines definierten Zeitraums und/oder innerhalb eines definierten Fahrstreckenabschnitts anhalten und/oder dass er einen definierten Geschwindigkeits-Wert mit dem Fahrzeug nicht überschreiten soll. Sofern der gemessene Temperaturwert einen größer als der erste Grenzwert ausgebildeten, zweiten definierten Grenzwert überschreitet, kann die Regel- und/oder Steuereinrichtung selbsttätig und/oder automatisch in eine zweite Warnstufe geschaltet werden, in der dem Fahrer mittels der Anzeigeeinrichtung angezeigt werden kann, dass er das Fahrzeug sofort anhalten soll. Die sich durch die erfindungsgemäße Vorrichtung ergebenden Vorteile sind identisch mit den bereits gewürdigten Vorteilen der erfindungsgemäßen Verfahrensführung, so dass diese an dieser Stelle nicht wiederholt werden.

Bevorzugt kann der wenigstens eine Temperatursensor beispielsweise als Thermoelement und/oder als NTC-Temperatursensor ausgebildet sein. Weiter bevorzugt ist die Regel- und/oder Steuereinrichtung stationär und/oder unbeweglich an dem Fahrzeug festgelegt, um den Aufbau der erfindungsgemäßen Vorrichtung zu vereinfachen. Bevorzugt ist zudem der Temperatursensor dem Fahrzeugreifen zugeordnet, um eine hohe Messgenauigkeit des Temperatursensors sicherzustellen.

Weiter bevorzugt ist der Temperatursensor mittels einer drahtlosen SignalübertragungsEinrichtung signalübertragend mit der Regel- und/oder Steuereinrichtung verbunden, wobei dem Temperatursensor eine Sendeeinrichtung der Signalübertragungs-Einrichtung zugeordnet ist, mittels der das Messsignal des Temperatursensors an eine der Regel- und/oder Steuereinrichtung zugeordnete Empfangseinrichtung der Signalübertragungs-Einrichtung übermittelt werden können. Auf diese Weise kann das Messsignal des Temperatursensors einfach und zuverlässig an die Regel- und/oder Steuereinrichtung übermittelt werden.

Konkret kann der Temperatursensor wenigstens ein Sensor-Kontaktelement aufweisen, das zur signalübertragenden Verbindung von Temperatursensor und Sendeeinrichtung signalübertragend mit wenigstens einem zu dem Sensor-Kontaktelement korrespondierenden Sender-Kontaktelement der Sendeeirichtung verbunden werden kann. Bevorzugt ist dabei vorgesehen, dass zur signalübertragenden Verbindung von Sensor-Kontaktelement und Sender-Kontaktelement das Sensor-Kontaktelement in Anlage mit dem Sender-Kontaktelement ist. So ist die signalübertragende Verbindung von Sensor-Kontaktelement und Sender-Kontaktelement besonders zuverlässig ausgebildet. Zudem wird so auch eine besonders kompakte Bauweise realisiert.

Bevorzugt ist das wenigstens eine Sensor-Kontaktelement stabartig ausgebildet ist, um den Temperatursensor besonders einfach auszubilden. Weiter bevorzugt ist das wenigstens eine Sender-Kontaktelement ringförmig und/oder plattenförmig ausgebildet ist, um den Kontakt zwischen dem Sensor-Kontaktelement und dem Sender-Kontaktelement zuverlässig sicherzustellen.

Alternativ kann zur signalübertragenden Verbindung von Sensor-Kontaktelement und Sender-Kontaktelement das Sensor-Kontaktelement auch außer Anlage mit dem Sender-Kontaktelement sein, wobei dann eine Signalübertragungs-Einrichtung vorgesehen ist, mittels der das Sensor-Kontaktelement und das Sender-Kontaktelement signalübertragend miteinander verbunden werden können. So kann die signalübertragende Verbindung von Sensor-Kontaktelement und Sender-Kontaktelement besonders einfach und flexibel ausgebildet werden. Die Signalübertragungs-Einrichtung kann dabei beispielsweise als Datenkabel und/oder als optische und/oder als digitale Signalübertragungs-Einrichtung ausgebildet sein. Bevorzugt ist die Sendeeinrichtung dabei in einem definierten Nahbereich im Bereich des Temperatursensors angeordnet, um eine kompakte Bauweise und eine zuverlässige Verbindung von Sensor-Kontaktelement und Sender-Kontaktelement sicherzustellen.

Grundsätzlich kann die Sendeeinrichtung in einem mit Luft gefüllten Hohlraum des als Luftreifen ausgebildeten Fahrzeugreifens angeordnet sein, wobei dann bevorzugt vorgesehen ist, dass das Sensor-Kontaktelement ebenfalls in dem Hohlraum angeordnet ist. Bevorzugt ist es jedoch, wenn die Sendeeinrichtung außerhalb des Hohlraums des als Luftreifens ausgebildeten Fahrzeugreifens angeordnet ist, da so die Montage bzw. eine zuverlässige Befestigung der Sendeeinrichtung an dem Fahrzeugreifen deutlich vereinfacht ist. Sofern die Sendeeinrichtung außerhalb des Hohlraums angeordnet ist, ist das Sensor-Kontaktelement dann vorzugsweise ebenfalls außerhalb des Hohlraums angeordnet, um den Temperatursensor und die Sendeeinrichtung auf einfache und funktionssichere Weise signaltechnisch miteinander verbinden zu können.

Bevorzugt ist eine Fixiereinrichtung vorgesehen, mittels der die Sendeeinrichtung an einem Luftventil des als Luftreifen ausgebildeten Fahrzeugreifens festgelegt ist. Auf diese Weise kann die Sendeeinrichtung besonders einfach an dem Fahrzeugreifen festgelegt werden. Bevorzugt ist dabei vorgesehen, dass die festgelegte Sendeeinrichtung das Luftventil, insbesondere mit einem definierten Spaltabstand, zumindest bereichsweise ringförmig umgreift. So kann die Sendeeinrichtung einfach und zuverlässig an dem Luftventil festgelegt werden.

Vorzugsweise weist die Fixiereinrichtung wenigstens ein Spannelement auf, mittels dem die Sendeeinrichtung gegen einen luftventilseitigen Anschlag spannbar und/oder pressbar ist, um die Sendeeinrichtung einfach und zuverlässig an dem Luftventil festlegen zu können. Bevorzugt ist dabei vorgesehen, dass das Spannelement durch ein auf das Luftventil schraubares Befestigungselement, insbesondere durch eine Schraubenmutter, gebildet ist. So kann die Festlegung der Sendeeinrichtung an dem Luftventil einfach und kostengünstig realisiert werden.

Bevorzugt ist der Temperatursensor an einem Luftventil des als Luftreifen ausgebildeten Fahrzeugreifens festgelegt. So kann der Temperatursensor besonders einfach an dem Fahrzeugreifen festgelegt werden. Besonders bevorzugt ist der Temperatursensor dabei derart an dem Luftventil festgelegt, dass mittels diesem die Temperatur, insbesondere die Lufttemperatur, in einem mit Luft gefüllten Hohlraum des Luftreifens gemessen werden kann. So kann der Zustand des Fahrzeugreifens zuverlässig und mit hoher Genauigkeit ermittelt werden.

Weiter bevorzugt ist der Temperatursensor zumindest bereichsweise in das Luftventil einvulkanisiert ist, um den Temperatursensor einfach und zuverlässig an dem Luftventil festzulegen und eine luftdichte Befestigung des Luftventils an dem Fahrzeugreifen sicherzustellen. Bevorzugt ist dabei vorgesehen, dass das wenigstens eine Sensor-Kontaktelement und/oder ein Messbereich des Temperatursensors zum Messen der Reifentemperatur nach außen freigelegt bzw. von außen zugänglich ist und/oder von dem Luftventil abragt, um den Temperatursensor mit der Sendeeinrichtung verbinden und/oder die Reifentemperatur zuverlässig messen zu können.

Erfindungsgemäß wird auch ein Luftventil an einem als Luftreifen ausgebildeten Fahrzeugreifen mit den Merkmalen des Anspruchs 16 beansprucht. Die sich hieraus ergebenden Vorteile sind identisch mit den bereits gewürdigten Vorteilen des erfindungsgemäßen Verfahrens und/oder der erfindungsgemäßen Vorrichtung, so dass diese hier ebenfalls nicht wiederholt werden. Bevorzugt weist dabei jeder Fahrzeugreifen eines Fahrzeugs das erfindungsgemäße Luftventil auf. Das Fahrzeug kann dabei beispielsweise auch durch ein Fahrzeug-Gespann gebildet sein, bei dem ein Zugfahrzeug mit einem Anhänger/Auflieger gekoppelt ist.

Die Erfindung und ihre vorteilhaften Aus- und/oder Weiterbildungen sowie deren Vorteile werden nachfolgend anhand von Zeichnungen lediglich beispielhaft näher erläutert.

Es zeigen:
- Fig. 1: in einer Seitenansicht ein Nutzfahrzeug mit der erfindungsgemäßen Vorrichtung;
- Fig. 2: in einer schematischen Schnittdarstellung ein Luftventil des Nutzfahrzeugs;
- Fig. 3: ein Diagramm, anhand dem der Ablauf des erfindungsgemäßen Verfahrens erläutert wird;
- Fig. 4: ein Diagramm, anhand dem der Aufbau der erfindungsgemäßen Vorrichtung erläutert wird;
- Fig. 5: in einer Darstellung gemäß Fig. 2 das Luftventil in einer zweiten Ausführungsform;
- Fig. 6: in einer Darstellung gemäß Fig. 2 das Luftventil in einer dritten Ausführungsform, und
- Fig. 7: in einer Seitenansicht ein Fahrzeug-Gespann mit der erfindungsgemäßen Vorrichtung.

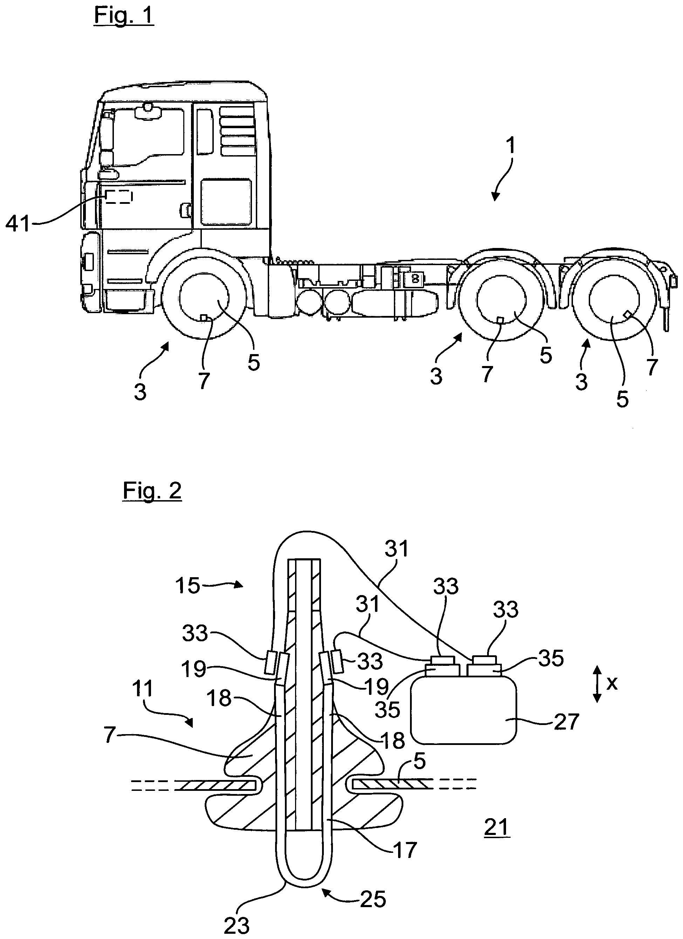

In Fig. 1 ist ein hier beispielhaft als Lastkraftwagen 1 ausgebildetes Nutzfahrzeug gezeigt. Der Lastkraftwagen 1 weist hier beispielhaft mehrere, hier beispielhaft sechs, als Luftreifen ausgebildete Fahrzeugreifen 3 auf. Jeder dieser Fahrzeugreifen 3 umfasst hier eine Felge 5 mit einem an der Felge festgelegten Luftventil 7.

In Fig. 2 ist schematisch ein Schnitt durch einen der Fahrzeugreifen 3 im Bereich seines Luftventils 7 gezeigt. Das hier im Wesentlichen rotationssymmetrisch ausgebildete Luftventil 7 weist, in Axialrichtung x gesehen, an einem Endbereich eine Befestigungseinrichtung 11 auf, mittels der das Luftventil 7 abdichtend an der Felge 5 befestigt werden kann. An seinem, in Axialrichtung x gesehen, anderen Endbereich weist das Luftventil 7 einen Anschlussstutzen 15 auf, an den beispielsweise ein Kompressor oder dergleichen zur Befüllung des Fahrzeugreifen 3 mit Luft angeschlossen werden kann.

Wie aus Fig. 2 weiter hervorgeht, ist, hier lediglich beispielhaft, ein Temperatursensor 17 an dem Luftventil 7 festgelegt. Das Luftventil 7 und der Temperatursensor 17 bilden hier eine Baueinheit aus. Mittels des Temperatursensors 17 kann die Lufttemperatur in einem Hohlraum 21 des Fahrzeugreifens 3 gemessen werden. Der Temperatursensor 17 ist hier beispielhaft als im Wesentlichen U-förmiges Thermoelement ausgebildet und weist hier an einem Endbereich jedes U-Schenkels 18 jeweils ein Sensor-Kontaktelement 19 auf. Die Sensor-Kontaktelemente 19 sind hier beispielhaft, in Axialrichtung x gesehen, zwischen der Befestigungseinrichtung 11 und dem Anschlussstutzen 15 angeordnet und somit außerhalb des Hohlraums 21 des Fahrzeugreifens 3 angeordnet.

Zur Festlegung des Temperatursensors 17 an dem Luftventil 7 ist der Temperatursensor 17 hier beispielhaft mit seinen U-schenkeln 18 in das Luftventil 7 einvulkanisiert. Die Sensor-Kontaktelemente 19 des Temperatursensors 17 ragen hier dabei von dem Luftventil 7 ab. Alternativ und/oder zusätzlich zur Einvulkanisierung wäre es natürlich aber auch denkbar, den Temperatursensor 17 anderweitig, beispielsweise stoffschlüssig, formschlüssig und/oder kraftschlüssig, an dem Luftventil 7 festzulegen.

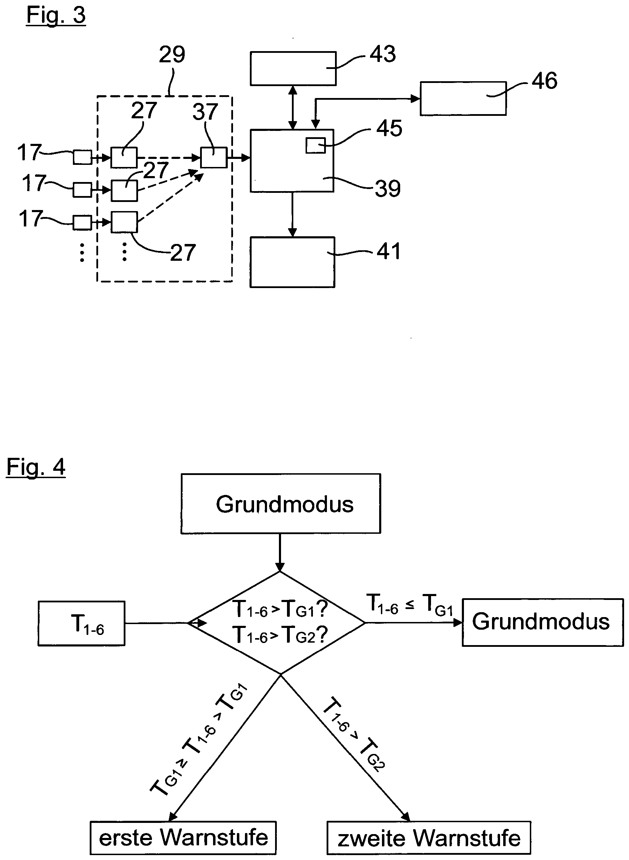

Wie in Fig. 2 weiter gezeigt ist, ragt der Temperatursensor 17 hier beispielhaft mit seinem U-Bogen 23 von dem Luftventil 7 ab in den mit Luft gefüllten Hohlraum 21 des Fahrzeugreifens 3. Der U-Bogen 23 bildet hier einen Messbereich 25 des Temperatursensors 17 aus, mittels dem die Lufttemperatur in dem Hohlraum 21 des Fahrzeugreifens 3 gemessen werden kann. Das Messsignal des Temperatursensors 17 wird hier beispielhaft über die Sensor-Kontaktelemente 19 an eine Sendeeinrichtung 27 einer drahtlosen SignalübertragungsEinrichtung 29 (Fig. 3) übermittelt. Die Sendeeinrichtung 27 ist hier beispielhaft außerhalb des Hohlraums 21 des Fahrzeugreifens 3 angeordnet und kann beispielsweise außenseitig an der Felge 5 des Fahrzeugreifens 3 befestigt sein. Gemäß Fig. 2 ist die Sendeeinrichtung 27, hier lediglich beispielhaft, mittels zweier Kabel 31 signalübertragend mit dem Temperatursensor 17 verbunden. Hierzu weist jedes Kabel 31 zwei Kabel-Kontaktelemente 33 auf, von denen jeweils eines in Anlage mit einem Sensor-Kontaktelement 19 und ein anderes in Anlage mit einem zu diesem Sensor-Kontaktelement 19 korrespondierenden Sender-Kontaktelement 35 der Sendeeinrichtung 27 ist.

Wie aus Fig. 3 hervorgeht, sind die den Fahrzeugreifen 3 zugeordneten Sendeeinrichtungen 27 signalübertragend mit einer Empfangseinrichtung 37 der drahtlosen SignalübertragungsEinrichtung 29 verbunden. Auf diese Weise werden die Messsignale der Temperatursensoren 17 an die Empfangseinrichtung 37 übermittelt. Die Empfangseinrichtung 37 ist hier stationär bzw. unbeweglich an dem Lastkraftwagen 1 festgelegt und datenübertragend mit einer hier ebenfalls stationär bzw. unbeweglich an dem Lastkraftwagen 1 festgelegten Regel- und/oder Steuereinrichtung 39 verbunden, so dass die von der Empfangseinrichtung 37 empfangenen Messsignale an die Regel- und/oder Steuereinrichtung 39 übermittelt werden. Die Regel- und/oder Steuereinrichtung 39 ist weiter derart signaltechnisch mit einer Anzeigeeinrichtung 41 des Lastkraftwagens 1 verbunden, dass mittels der Regel- und/oder Steuereinrichtung 39 die Anzeige der Anzeigeeinrichtung 41 gesteuert bzw. geregelt werden kann. Mittels der Anzeigeeinrichtung 41 können dem Fahrer des Lastkraftwagens 1 Informationen über den Zustand der Fahrzeugreifen 3 angezeigt werden. Die Anzeigeeinrichtung 41 ist hier beispielhaft als Bildschirm ausgebildet. Die Steuerung bzw. Regelung der Anzeigeeinrichtung 41 mittels der Regel- und/oder Steuereinrichtung 39 wird nachfolgend anhand der Fig. 4 näher erläutert:
Sofern ein mittels der Temperatursensoren 17 gemessener Temperaturwert T₁₋₆ einen ersten definierten Grenzwert T_{G1} überschreitet und einen größer als der erste Grenzwert ausgebildeten, zweiten definierten Grenzwert T_{G2} nicht überschreitet, schaltet die Regel- und/oder Steuereinrichtung 39 selbsttätig bzw. automatisch in eine erste Warnstufe, in der dem Fahrer mittels der Anzeigeeinrichtung 41 angezeigt wird, dass er den Lastkraftwagen 1 innerhalb eines definierten Zeitraums und/oder innerhalb eines definierten Fahrstreckenabschnitts anhalten und/oder dass er einen definierten Geschwindigkeits-Wert mit dem Lastkraftwagen 1 nicht überschreiten soll. Sofern ein gemessener Temperaturwert der Temperatursensoren 17 den zweiten definierten Grenzwert T_{G2} überschreitet, schaltet die Regel- und/oder Steuereinrichtung 39 selbsttätig bzw. automatisch in eine zweite Warnstufe, in der dem Fahrer mittels der Anzeigeeinrichtung 41 angezeigt wird, dass er den Lastkraftwagen 1 sofort anhalten soll. Sofern keiner der mittels der Temperatursensoren 17 gemessenen Temperaturwerte den ersten Grenzwert T_{G1} überschreitet, schaltet die Regel- und/oder Steuereinrichtung 39 hier beispielhaft selbsttätig bzw. automatisch in einen Grundmodus, in dem Fahrer mittels der Anzeigeeinrichtung 41 keine Informationen zu dem Zustand der Fahrzeugreifen 17 angezeigt werden.

Gemäß Fig. 3 ist die Regel- und/oder Steuereinrichtung 39 hier beispielhaft auch derart signalübertragend mit einem Navigationssystem 43 des Lastkraftwagens 1 verbunden, dass Daten über die aktuelle und/oder zukünftige Verkehrssituation des Lastkraftwagens 1 an eine Prognostiziereinrichtung 45 der Regel- und/oder Steuereinrichtung 39 übermittelt werden können. Mittels dieser Daten und den mittels der Temperatursensoren 17 gemessenen Temperaturwerten kann die Prognostiziereinrichtung 45 eine zukünftige Temperaturentwicklung der Fahrzeugreifen 3 prognostizieren bzw. vorhersagen. Mittels der prognostizierten bzw. vorhergesagten Temperaturentwicklung kann die Regel- und/oder Steuereinrichtung 39 hier dann in der ersten Warnstufe den optimalen definierten Zeitraum bzw. Fahrstreckenabschnitt ermitteln, in dem der Fahrer den Lastkraftwagen 1 anhalten soll. Des Weiteren kann die Routenplanung des Navigationssystems 43 hier auch unter Berücksichtigung des definierten Zeitraums und/oder des definierten Fahrstreckenabschnitts selbsttätig bzw. automatisch mittels der Regel- und/oder Steuereinrichtung 39 geändert werden.

Optional kann die Regel- und/oder Steuereinrichtung 39 weiter auch mit einer Geschwindigkeitsregelanlage 46 (Fig. 3) des Lastkraftwagens 1 verbunden sein. Sofern die aktuelle Fahrzeuggeschwindigkeit größer ist als der definierte Geschwindigkeits-Wert, wird die Fahrzeuggeschwindigkeit mittels der Geschwindigkeitsregelanlage dann selbsttätig derart geregelt bzw. gesteuert, so dass der Lastkraftwagen 1 den definierten Geschwindigkeits-Wert nicht überschreitet.

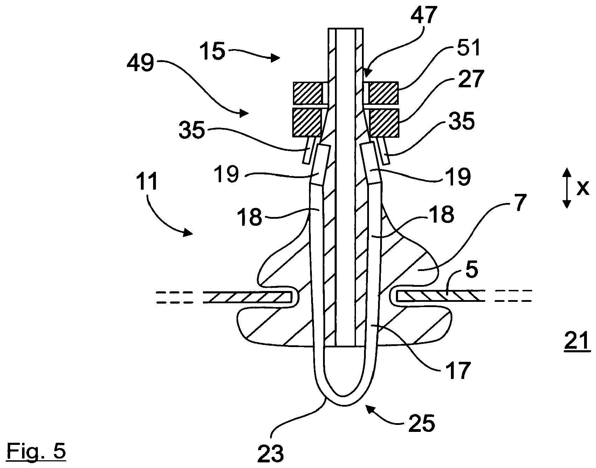

In Fig. 5 ist eine zweite Ausführungsform des Luftventils 7 gezeigt. Dabei ist, im Gegensatz zur in Fig. 2 gezeigten ersten Ausführungsform, die Sendeeinrichtung 27 an dem Luftventil 7 festgelegt, so dass das Luftventil 7, der Temperatursensor 17 und die Sendeeirichtung 27 hier eine Baueinheit ausbilden.

Die Sendeeinrichtung 27 umgreift hier beispielhaft das Luftventil 7 mit einem definierten Spaltabstand ringförmig und ist in Anlage mit einem Anschlag 49 des Luftventils 7. Der Anschlag 49 ist hier beispielhaft durch eine Vergrößerung des Durchmessers des Luftventils 7 gebildet. Des Weiteren ist ein hier beispielhaft als Schraubenmutter 51, insbesondere als Rändelmutter, ausgebildetes Befestigungselement vorgesehen, mittels dem die Sendeeinrichtung 27 gegen den luftventilseitigen Anschlag 49 spannbar bzw. pressbar ist. Alternativ und/oder zusätzlich könnte die Sendeeinrichtung 27 aber auch anderweitig, beispielsweise kraftschlüssig, formschlüssig und/oder reibschlüssig, an dem Luftventil 7 festgelegt sein.

Des Weiteren ist bei der in Fig. 5 gezeigten Ausführungsform des Luftventils 7 die Sendeeinrichtung 27 derart ausgebildet, dass das jeweilige Sensor-Kontaktelement 19 des Temperatursensors 17 in Anlage mit dem korrespondierenden Sender-Kontaktelement 35 ist. Die Kabel 31 (Fig. 2) sind hier daher nicht vorgesehen. Konkret sind die Sensor-Kontaktelemente 19 hier stabförmig und die Sender-Kontaktelemente 35 plattenförmig ausgebildet.

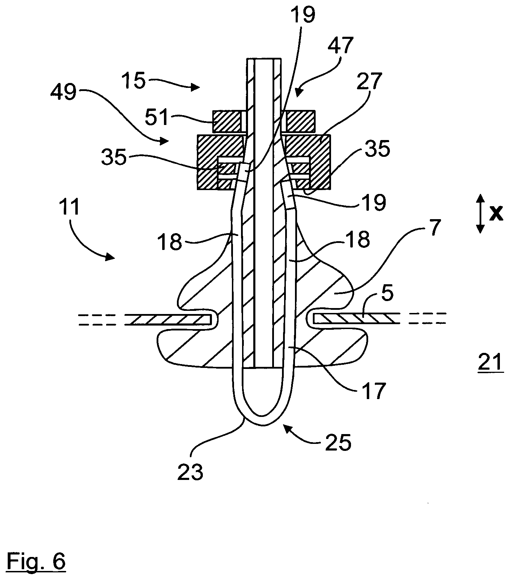

In Fig. 6 ist eine dritte Ausführungsform des Luftventils 7 gezeigt. Dabei sind, im Gegensatz zur in Fig. 5 gezeigten zweiten Ausführungsform, die Sender-Kontaktelemente 35 ringförmig ausgebildet. Auf diese Weise können die Sender-Kontaktelemente 35 und die Sensor-Kontaktelemente 19 besonders zuverlässig miteinander in Anlage gebracht werden.

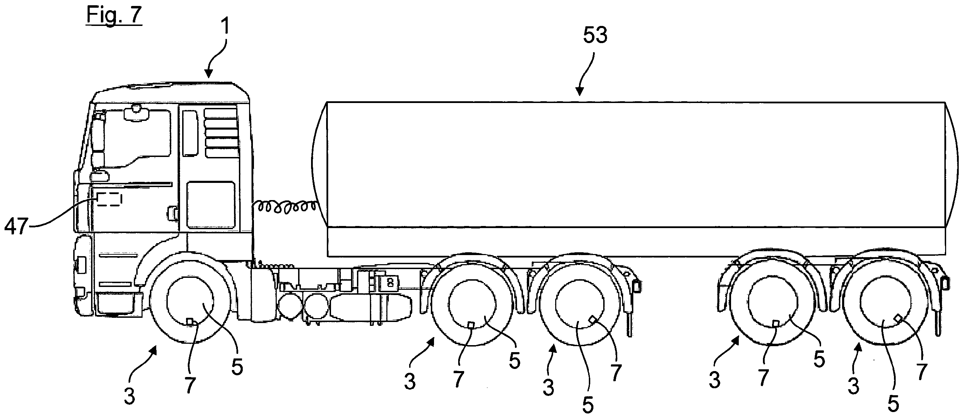

In Fig. 7 ist der Lastkraftwagen 1 mit einem Anhänger/Auflieger 53 gekoppelt, so dass der Lastkraftwagen 1 und der Anhänger/Auflieger 53 ein Fahrzeug-Gespann ausbilden. Jeder Fahrzeugreifen 3 des Fahrzeug-Gespanns weist hier das Luftventil 7 auf, wodurch die Temperaturen aller Fahrzeugreifen 3 des Fahrzeug-Gespanns gemessen werden.

### Bezugszeichenliste

- 1: Lastkraftwagen
- 3: Fahrzeugreifen
- 5.: Felge
- 7: Luftventil
- 11: Befestigungseinrichtung
- 15: Anschlussstutzen
- 17: Temperatursensor
- 18: U-Schenkel
- 19: Sensor-Kontaktelement
- 21: Hohlraum
- 23: U-Bogen
- 25: Messbereich
- 27: Sendeinrichtung
- 29: drahtlose Signalübertragungseinrichtung
- 31: Kabel
- 33: Kabel-Kontaktelement
- 35: Sender-Kontaktelement
- 37: Empfangseinrichtung
- 39: Regel- und/oder Steuereinrichtung
- 41: Anzeigeeinrichtung
- 43: Navigationssystem
- 45: Prognostiziereinrichtung
- 46: Geschwindigkeitsregelanlage
- 49: Anschlag
- 51: Schraubenmutter
- 53: Anhänger/Auflieger
- T₁₋₆: Temperaturwerte
- T_{G1}: erster Grenzwert
- T_{G2}: zweiter Grenzwert

## Patentansprüche

1. Verfahren zur Unterstützung eines Fahrers eines Fahrzeugs, insbesondere eines Nutzfahrzeugs, wobei das Fahrzeug (1) wenigstens einen, insbesondere als Luftreifen ausgebildeten, Fahrzeugreifen (3) aufweist, wobei wenigstens ein Temperatursensor (17) vorgesehen ist, mittels dem eine Temperatur des Fahrzeugreifens (3) messbar ist, wobei das Fahrzeug (1) eine, insbesondere visuelle und/oder akustische, Anzeigeeinrichtung (41) aufweist, mittels der dem Fahrer des Fahrzeugs (1) Informationen über den Zustand des Fahrzeugreifens (3) anzeigbar sind, und wobei das Fahrzeug (1) eine signalübertragend mit dem Temperatursensor (17) verbundene Regel- und/oder Steuereinrichtung (39) aufweist, mittels der die Anzeige der Anzeigeeinrichtung (41) steuerbar und/oder regelbar ist, **dadurch gekennzeichnet, dass** die Regel- und/oder Steuereinrichtung (39) in mehrere Warnstufen schaltbar ist, dergestalt,
dass, sofern wenigstens ein mittels des Temperatursensors (17) gemessener Temperaturwert einen ersten definierten Grenzwert (T_{G1}) überschreitet, die Regel- und/oder Steuereinrichtung (39) selbsttätig in eine erste Warnstufe schaltet, in der dem Fahrer mittels der Anzeigeeinrichtung (41) angezeigt wird, dass er das Fahrzeug (1) innerhalb eines definierten Zeitraums und/oder innerhalb eines definierten Fahrstreckenabschnitts anhalten und/oder dass er einen definierten Geschwindigkeits-Wert mit dem Fahrzeug (1) nicht überschreiten soll, und
dass, sofern der gemessene Temperaturwert einen größer als der erste Grenzwert (T_{G1}) ausgebildeten, zweiten definierten Grenzwert (T_{G2}) überschreitet, die Regel- und/oder Steuereinrichtung (39) selbsttätig in eine zweite Warnstufe schaltet, in dem dem Fahrer mittels der Anzeigeeinrichtung (41) angezeigt wird, dass er das Fahrzeug (1) sofort anhalten soll.

2. Verfahren nach Anspruch 1, **dadurch gekennzeichnet, dass**, sofern der gemessene Temperaturwert den ersten Grenzwert (T_{G1}) nicht überschreitet, die Regel- und/oder Steuereinrichtung (39) selbsttätig in einen Grundmodus schaltet, in der dem Fahrer mittels der Anzeigeeinrichtung (41) keine Informationen zu dem Zustand des Fahrzeugreifens (3) angezeigt werden.

3. Verfahren nach Anspruch 1 oder 2, **dadurch gekennzeichnet, dass** die Regel- und/oder Steuereinrichtung (39) signalübertragend mit einer Geschwindigkeitsregelanlage (46) des Fahrzeugs (1) verbunden ist, und dass, sofern die aktuelle Fahrzeuggeschwindigkeit größer ist als der definierte Geschwindigkeits-Wert, die Fahrzeuggeschwindigkeit mittels der Geschwindigkeitsregelanlage (46) selbsttätig derart geregelt und/oder gesteuert wird, dass das Fahrzeug (1) den definierten Geschwindigkeits-Wert nicht überschreitet.

4. Verfahren nach einem der vorhergehenden Ansprüche, **dadurch gekennzeichnet, dass** die Regel- und/oder Steuereinrichtung (39) eine Prognostiziereinrichtung (45) aufweist, mittels der eine zukünftige Temperaturentwicklung des Fahrzeugreifens (3) in Abhängigkeit von wenigstens einem Reifentemperaturparameter prognostizierbar und/oder vorhersehbar ist, und dass der definierte Zeitraum und/oder der definierte Fahrstreckenabschnitt über diese prognostizierte Temperaturentwicklung des Fahrzeugreifens (3) mittels der Regel- und/oder Steuereinrichtung (39) ermittelt wird, wobei bevorzugt vorgesehen ist, dass der wenigstens eine Reifentemperaturparameter durch wenigstens einen mittels des Temperatursensors (17) gemessenen Temperaturwert und/oder durch die aktuelle und/oder zukünftige Verkehrssituation des Fahrzeugs (1) gebildet ist.

5. Verfahren nach einem der vorhergehenden Ansprüche, **dadurch gekennzeichnet, dass** die Regel- und/oder Steuereinrichtung (39) signalübertragend mit einem Navigationssystem (43) des Fahrzeugs (1) verbunden ist, wobei bevorzugt vorgesehen ist, dass die Routenplanung des Navigationssystems (43) unter Berücksichtigung des definierten Zeitraums und/oder des definierten Fahrstreckenabschnitts selbsttätig mittels der Regel- und/oder Steuereinrichtung (39) geändert wird.

6. Vorrichtung zur Unterstützung eines Fahrers eines Fahrzeugs, insbesondere eines Nutzfahrzeugs, wobei die Vorrichtung wenigstens einen, insbesondere als Luftreifen ausgebildeten, Fahrzeugreifen (3) aufweist, wobei wenigstens ein Temperatursensor (17) vorgesehen ist, mittels dem eine Temperatur des Fahrzeugreifens (3) messbar ist, wobei die Vorrichtung eine, insbesondere visuelle und/oder akustische, Anzeigeeinrichtung (41) aufweist, mittels der dem Fahrer des Fahrzeugs (1) Informationen über den Zustand des Fahrzeugreifens (3) anzeigbar sind, und wobei die Vorrichtung eine signalübertragend mit dem Temperatursensor (17) verbundene Regel- und/oder Steuereinrichtung (39) aufweist, mittels der die Anzeige der Anzeigeeinrichtung (41) steuerbar und/oder regelbar ist, **dadurch gekennzeichnet, dass** die Regel- und/oder Steuereinrichtung (39) in mehrere Warnstufen schaltbar ist, dergestalt,
dass, sofern wenigstens ein mittels des Temperatursensors (17) gemessener Temperaturwert einen ersten definierten Grenzwert (T_{G1}) überschreitet, die Regel- und/oder Steuereinrichtung (39) selbsttätig in eine erste Warnstufe schaltbar ist, in der dem Fahrer mittels der Anzeigeeinrichtung (41) anzeigbar ist, dass er das Fahrzeug (1) innerhalb eines definierten Zeitraums und/oder innerhalb eines definierten Fahrstreckenabschnitts anhalten und/oder dass er einen definierten Geschwindigkeits-Wert mit dem Fahrzeug (1) nicht überschreiten soll, und
dass, sofern der gemessene Temperaturwert einen größer als der erste Grenzwert (T_{G1}) ausgebildeten, zweiten definierten Grenzwert (T_{G2}) überschreitet, die Regel- und/oder Steuereinrichtung (39) selbsttätig in eine zweite Warnstufe schaltbar ist, in der dem Fahrer mittels der Anzeigeeinrichtung (41) anzeigbar ist, dass er das Fahrzeug (1) sofort anhalten soll.

7. Vorrichtung nach Anspruch 6, **dadurch gekennzeichnet, dass** der Temperatursensor (17) mittels einer drahtlosen Signalübertragungs-Einrichtung (29) signalübertragend mit der Regel- und/oder Steuereinrichtung (39) verbunden ist, wobei dem Temperatursensor (17) eine Sendeeinrichtung (27) der Signalübertragungs-Einrichtung (29) zugeordnet ist, mittels der das Messsignal des Temperatursensors (17) an eine der Regel- und/oder Steuereinrichtung (39) zugeordnete Empfangseinrichtung (37) der Signalübertragungs-Einrichtung (29) übermittelbar ist.

8. Vorrichtung nach Anspruch 7, **dadurch gekennzeichnet, dass** der Temperatursensor (17) wenigstens ein Sensor-Kontaktelement (19) aufweist, das zur signalübertragenden Verbindung von Temperatursensor (17) und Sendeeinrichtung (27) signalübertragend mit wenigstens einem zu dem Sensor-Kontaktelement (19) korrespondierenden Sender-Kontaktelement (35) der Sendeeirichtung (27) verbindbar ist, wobei bevorzugt vorgesehen ist, dass zur signalübertragenden Verbindung von Sensor-Kontaktelement (19) und Sender-Kontaktelement (35) das Sensor-Kontaktelement (19) in Anlage mit dem Sender-Kontaktelement (35) ist.

9. Vorrichtung nach Anspruch 8, **dadurch gekennzeichnet, dass** das wenigstens eine Sensor-Kontaktelement (19) stabartig ausgebildet ist, und/oder dass das wenigstens eine Sender-Kontaktelement (19) ringförmig und/oder plattenförmig ausgebildet ist.

10. Vorrichtung nach Anspruch 8 oder 9, **dadurch gekennzeichnet, dass** zur signalübertragenden Verbindung von Sensor-Kontaktelement (19) und Sender-Kontaktelement (35) das Sensor-Kontaktelement (19) außer Anlage mit dem Sender-Kontaktelement (35) ist, wobei eine Signalübertragungs-Einrichtung (31) vorgesehen ist, mittels der das Sensor-Kontaktelement (19) und das Sender-Kontaktelement (35) signalübertragend miteinander verbindbar sind.

11. Vorrichtung nach einem der Ansprüche 7 bis 10, **dadurch gekennzeichnet, dass** die Sendeeinrichtung (27) außerhalb eines mit Luft gefüllten Hohlraums (21) des als Luftreifen ausgebildeten Fahrzeugreifens (3) angeordnet ist, wobei bevorzugt vorgesehen ist, dass das Sensor-Kontaktelement (19) ebenfalls außerhalb des Hohlraums (21) angeordnet ist.

12. Vorrichtung nach einem der Ansprüche 7 bis 11, **dadurch gekennzeichnet, dass** eine Fixiereinrichtung vorgesehen ist, mittels der die Sendeeinrichtung (27) an einem Luftventil (7) des als Luftreifen ausgebildeten Fahrzeugreifens (3) festgelegt ist, wobei bevorzugt vorgesehen ist, dass die festgelegte Sendeeinrichtung (27) das Luftventil (7), insbesondere mit einem definierten Spaltabstand, zumindest bereichsweise ringförmig umgreift.

13. Vorrichtung nach Anspruch 12, **dadurch gekennzeichnet, dass** die Fixiereinrichtung wenigstens ein Spannelement (51) aufweist, mittels dem die Sendeeinrichtung (27) gegen einen luftventilseitigen Anschlag (49) spannbar und/oder pressbar ist, wobei bevorzugt vorgesehen ist, dass das Spannelement (51) durch ein auf das Luftventil (7) schraubares Befestigungselement, insbesondere durch eine Schraubenmutter, gebildet ist.

14. Vorrichtung nach einem der Ansprüche 6 bis 13, **dadurch gekennzeichnet, dass** der Temperatursensor (17) an einem Luftventil (7) des als Luftreifen ausgebildeten Fahrzeugreifens (3) festgelegt ist, wobei bevorzugt vorgesehen ist, dass der Temperatursensor (17) derart an dem Luftventil (7) festgelegt ist, dass mittels diesem die Temperatur, insbesondere die Lufttemperatur, in einem mit Luft gefüllten Hohlraum (21) des Luftreifens (3) messbar ist.

15. Vorrichtung nach Anspruch 13, **dadurch gekennzeichnet, dass** der Temperatursensor (17) zumindest bereichsweise in das Luftventil (7) einvulkanisiert ist, wobei bevorzugt vorgesehen ist, dass das wenigstens eine Sensor-Kontaktelement (19) und/oder ein Messbereich des Temperatursensors (17) zum Messen der Reifentemperatur nach außen freigelegt ist und/oder von dem Luftventil (7) abragt.

16. Luftventil an einem als Luftreifen ausgebildeten Fahrzeugreifen, wobei an dem Luftventil (7) ein Temperatursensor (17) festgelegt ist, so dass der Temperatursensor (17) und das Luftventil (7) eine Baueinheit ausbilden,
wobei der Temperatursensor (17) derart an dem Luftventil (7) festgelegt ist, dass mittels diesem die Temperatur, insbesondere die Lufttemperatur, in einem mit Luft gefüllten Hohlraum (21) des Luftreifens (3) messbar ist,
wobei der Temperatursensor (17) mittels einer drahtlosen Signalübertragungs-Einrichtung (29) signalübertragend mit einer Regel- und/oder Steuereinrichtung (39) verbindbar ist, wobei dem Temperatursensor (17) eine Sendeeinrichtung (27) der Signalübertragungs-Einrichtung (29) zugeordnet ist, mittels der das Messsignal des Temperatursensors (17) an eine der Regel- und/oder Steuereinrichtung (39) zugeordnete Empfangseinrichtung (37) der Signalübertragungs-Einrichtung (29) übermittelbar ist,
wobei eine Fixiereinrichtung vorgesehen ist, mittels der die Sendeeinrichtung (27) an dem Luftventil (7) festgelegt ist,
wobei die Fixiereinrichtung wenigstens ein Spannelement (51) aufweist, mittels dem die Sendeeinrichtung (27) gegen einen luftventilseitigen Anschlag (49) spannbar und/oder pressbar ist, **dadurch gekennzeichnet, dass** der Temperatursensor (17) zumindest bereichsweise in das Luftventil (7) einvulkanisiert ist.

17. Fahrzeug, insbesondere Nutzfahrzeug, mit einer Vorrichtung nach einem der Ansprüche 6 bis 15 und/oder mit wenigstens einem Luftventil nach Anspruch 16.

## Claims

1. Method for assisting a driver of a vehicle, in particular a commercial vehicle, wherein the vehicle (1) has at least one vehicle tyre (3), in particular in the form of a pneumatic tyre, wherein there is provision for at least one temperature sensor (17), by means of which a temperature of the vehicle tyre (3) is measurable, wherein the vehicle (1) has an, in particular visual and/or acoustic, display device (41), by means of which information about the state of the vehicle tyre (3) is displayable to the driver of the vehicle (1), and wherein the vehicle (1) has a closed-loop and/or open-loop control device (39), connected to the temperature sensor (17) for signal transmission purposes, by means of which the display on the display device (41) is controllable in an open-loop and/or closed-loop manner, **characterized in that** the closed-loop and/or open-loop control device (39) is switchable to multiple warning levels, in such a way
that, if at least one temperature value measured by means of the temperature sensor (17) exceeds a first defined limit value (T_{G1}), the closed-loop and/or open-loop control device (39) automatically switches to a first warning level, at which the display device (41) is used to display to the driver that he should stop the vehicle (1) within a defined period and/or within a defined route section and/or that he should not exceed a defined speed value with the vehicle (1), and
that, if the measured temperature value exceeds a second defined limit value (T_{G2}), which is greater than the first limit value (T_{G1}), the closed-loop and/or open-loop control device (39) automatically switches to a second warning level, at which the display device (41) is used to display to the driver that he should stop the vehicle (1) immediately.

2. Method according to Claim 1, **characterized in that**, if the measured temperature value does not exceed the first limit value (T_{G1}), the closed-loop and/or open-loop control device (39) automatically switches to a basic mode, in which no information relating to the state of the vehicle tyre (3) is displayed to the driver by means of the display device (41).

3. Method according to Claim 1 or 2, **characterized in that** the closed-loop and/or open-loop control device (39) is connected to a speed control system (46) of the vehicle (1) for signal transmission purposes, and **in that**, if the current vehicle speed is greater than the defined speed value, the vehicle speed is automatically controlled by means of the speed control system (46) in a closed-loop and/or open-loop manner in such a way that the vehicle (1) does not exceed the defined speed value.

4. Method according to one of the preceding claims, **characterized in that** the closed-loop and/or open-loop control device (39) has a forecasting device (45), by means of which a future temperature trend of the vehicle tyre (3) is forecastable and/or predictable on the basis of at least one tyre temperature parameter, and **in that** the defined period and/or the defined route section is ascertained by means of the closed-loop and/or open-loop control device (39) by using this forecast temperature trend of the vehicle tyre (3), wherein there is preferably provision for the at least one tyre temperature parameter to be formed by at least one temperature value measured by means of the temperature sensor (17) and/or by the current and/or future traffic situation of the vehicle (1).

5. Method according to one of the preceding claims, **characterized in that** the closed-loop and/or open-loop control device (39) is connected to a navigation system (43) of the vehicle (1) for signal transmission purposes, wherein there is preferably provision for the route planning of the navigation system (43) to be automatically changed by means of the closed-loop and/or open-loop control device (39) in due consideration of the defined period and/or the defined route section.

6. Apparatus for assisting a driver of a vehicle, in particular a commercial vehicle, wherein the apparatus has at least one vehicle tyre (3), in particular in the form of a pneumatic tyre, wherein there is provision for at least one temperature sensor (17), by means of which a temperature of the vehicle tyre (3) is measurable, wherein the apparatus has an, in particular visual and/or acoustic, display device (41), by means of which information about the state of the vehicle tyre (3) is displayable to the driver of the vehicle (1), and wherein the apparatus has a closed-loop and/or open-loop control device (39), connected to the temperature sensor (17) for signal transmission purposes, by means of which the display on the display device (41) is controllable in an open-loop and/or closed-loop manner, **characterized in that** the closed-loop and/or open-loop control device (39) is switchable to multiple warning levels, in such a way
that, if at least one temperature value measured by means of the temperature sensor (17) exceeds a first defined limit value (T_{G1}), the closed-loop and/or open-loop control device (39) is automatically switchable to a first warning level, at which the display device (41) is able to be used to display to the driver that he should stop the vehicle (1) within a defined period and/or within a defined route section and/or that he should not exceed a defined speed value with the vehicle (1), and
that, if the measured temperature value exceeds a second defined limit value (T_{G2}), which is greater than the first limit value (T_{G1}), the closed-loop and/or open-loop control device (39) is automatically switchable to a second warning level, at which the display device (41) is able to be used to display to the driver that he should stop the vehicle (1) immediately.

7. Apparatus according to Claim 6, **characterized in that** the temperature sensor (17) is connected to the closed-loop and/or open-loop control device (39) for signal transmission purposes by means of a wireless signal transmission device (29), wherein the temperature sensor (17) has an associated transmitting device (27) of the signal transmission device (29), by means of which the measurement signal from the temperature sensor (17) is transferrable to a receiving device (37), associated with the closed-loop and/or open-loop control device (39), of the signal transmission device (29).

8. Apparatus according to Claim 7, **characterized in that** the temperature sensor (17) has at least one sensor contact element (19), which is connectable to at least one transmitter contact element (35), corresponding to the sensor contact element (19), of the transmitting device (27) for signal transmission purposes in order to connect the temperature sensor (17) and the transmitting device (27) for signal transmission purposes, wherein there is preferably provision for the sensor contact element (19) to be in bearing contact with the transmitter contact element (35) in order to connect the sensor contact element (19) and the transmitter contact element (35) for signal transmission purposes.

9. Apparatus according to Claim 8, **characterized in that** the at least one sensor contact element (19) is in bar-like form, and/or **in that** the at least one transmitter contact element (19) is in annular and/or plate-shaped form.

10. Apparatus according to Claim 8 or 9, **characterized in that** the sensor contact element (19) is out of bearing contact with the transmitter contact element (35) in order to connect the sensor contact element (19) and the transmitter contact element (35) for signal transmission purposes, wherein there is provision for a signal transmission device (31), by means of which the sensor contact element (19) and the transmitter contact element (35) are connectable to one another for signal transmission purposes.

11. Apparatus according to one of Claims 7 to 10, **characterized in that** the transmitting device (27) is arranged outside an air-filled cavity (21) of the vehicle tyre (3) in the form of a pneumatic tyre, wherein there is preferably provision for the sensor contact element (19) to likewise be arranged outside the cavity (21).

12. Apparatus according to one of Claims 7 to 11, **characterized in that** there is provision for a fixing device, by means of which the transmitting device (27) is fixed to an air valve (7) of the vehicle tyre (3) in the form of a pneumatic tyre, wherein there is preferably provision for the fixed transmitting device (27) to annularly engage around at least regions of the air valve (7), in particular with a defined gap clearance.

13. Apparatus according to Claim 12, **characterized in that** the fixing device has at least one clamping element (51), by means of which the transmitting device (27) is clampable and/or pressable against an air-valve-side stop (49), wherein there is preferably provision for the clamping element (51) to be formed by a securing element, in particular by a screw nut, that is screwable onto the air valve (7).

14. Apparatus according to one of Claims 6 to 13, **characterized in that** the temperature sensor (17) is fixed to an air valve (7) of the vehicle tyre (3) in the form of a pneumatic tyre, wherein there is preferably provision for the temperature sensor (17) to be fixed to the air valve (7) in such a way that the temperature, in particular the air temperature, in an air-filled cavity (21) of the pneumatic tyre (3) is measurable by means of said temperature sensor.

15. Apparatus according to Claim 13, **characterized in that** at least regions of the temperature sensor (17) are vulcanized in the air valve (7), wherein there is preferably provision for the at least one sensor contact element (19) and/or a measurement region of the temperature sensor (17) to be exposed to the outside and/or to protrude from the air valve (7) in order to measure the tyre temperature.

16. Air valve on a vehicle tyre in the form of a pneumatic tyre, wherein a temperature sensor (17) is fixed to the air valve (7), with the result that the temperature sensor (17) and the air valve (7) form a physical unit,
wherein the temperature sensor (17) is fixed to the air valve (7) in such a way that the temperature, in particular the air temperature, in an air-filled cavity (21) of the pneumatic tyre (3) is measurable by means of said temperature sensor,
wherein the temperature sensor (17) is connectable to a closed-loop and/or open-loop control device (39) for signal transmission purposes by means of a wireless signal transmission device (29),
wherein the temperature sensor (17) has an associated transmitting device (27) of the signal transmission device (29), by means of which the measurement signal from the temperature sensor (17) is transferrable to a receiving device (37), associated with the closed-loop and/or open-loop control device (39), of the signal transmission device (29),
wherein there is provision for a fixing device, by means of which the transmitting device (27) is fixed to the air valve (7),
wherein
the fixing device has at least one clamping element (51), by means of which the transmitting device (27) is clampable and/or pressable against an air-valve-side stop (49), **characterized in that** at least regions of the temperature sensor (17) are vulcanized in the air valve (7).

17. Vehicle, in particular commercial vehicle, having an apparatus according to one of Claims 6 to 15 and/or having at least one air valve according to Claim 16.

## Revendications

1. Procédé pour assister un conducteur d'un véhicule, notamment d'un véhicule utilitaire, le véhicule (1) possédant au moins un bandage de véhicule (3), notamment configuré en tant que bandage pneumatique, au moins un capteur de température (17) étant présent, au moyen duquel peut être mesurée une température du bandage de véhicule (3), le véhicule (1) possédant un dispositif d'indication (41), notamment visuel et/ou sonore, au moyen duquel des informations à propos de l'état du bandage de véhicule (3) peuvent être indiquées au conducteur du véhicule (1), et le véhicule (1) possédant un dispositif de régulation et/ou de commande (39) relié avec transmission de signal au capteur de température (17), au moyen duquel peut être commandée et/ou régulée l'indication du dispositif d'indication (41), **caractérisé en ce que** le dispositif de régulation et/ou de commande (39) peut être commuté en plusieurs niveaux d'alerte, de telle sorte
que dans la mesure où au moins une valeur de température mesurée au moyen du capteur de température (17) dépasse une première valeur limite (T_{G1}) définie, le dispositif de régulation et/ou de commande (39) commute automatiquement dans un premier niveau d'alerte dans lequel il est indiqué au conducteur, au moyen du dispositif d'indication (41), qu'il doit arrêter le véhicule (1) au sein d'une période définie et/ou au sein d'une portion de parcours définie et/ou qu'il ne doit pas dépasser une valeur de vitesse définie avec le véhicule (1), et
que dans la mesure où la valeur de température mesurée dépasse une deuxième valeur limite (T_{G2}) définie, configurée supérieure à la première valeur limite (T_{G1}) définie, le dispositif de régulation et/ou de commande (39) commute automatiquement dans un deuxième niveau d'alerte dans lequel il est indiqué au conducteur, au moyen du dispositif d'indication (41), qu'il doit arrêter le véhicule (1) immédiatement.

2. Procédé selon la revendication 1, **caractérisé en ce que** dans la mesure où la valeur de température mesurée ne dépasse pas la première valeur limite (T_{G1}) définie, le dispositif de régulation et/ou de commande (39) commute automatiquement dans un mode de base dans lequel aucune information à propos de l'état du bandage de véhicule (3) n'est indiquée au moyen du dispositif d'indication (41).

3. Procédé selon la revendication 1 ou 2, **caractérisé en ce que** le dispositif de régulation et/ou de commande (39) est relié avec transmission de signal à un équipement de régulation de vitesse (46) du véhicule, et **en ce que**, dans la mesure où la vitesse actuelle du véhicule est supérieure à la valeur de vitesse définie, la vitesse du véhicule est régulée et/ou commandée au moyen de l'équipement de régulation de vitesse (46) de telle sorte que le véhicule (1) ne dépasse pas la valeur de vitesse définie.

4. Procédé selon l'une des revendications précédentes, **caractérisé en ce que** le dispositif de régulation et/ou de commande (39) possède un dispositif de prévision (45) au moyen duquel peut être anticipé et/ou prévu un futur développement de la température du bandage de véhicule (3) en fonction d'au moins un paramètre de température de bandage, et **en ce que** la période définie et/ou la portion de parcours définie est déterminée au moyen du dispositif de régulation et/ou de commande (39) par le biais de ce développement anticipé de la température du bandage de véhicule (3), en prévoyant de préférence que l'au moins un paramètre de température de bandage est formé par au moins une valeur de température mesurée au moyen du capteur de température (17) et/ou par la situation de circulation actuelle et/ou future du véhicule (1).

5. Procédé selon l'une des revendications précédentes, **caractérisé en ce que** le dispositif de régulation et/ou de commande (39) est relié avec transmission de signal à un système de navigation (43) du véhicule (1), en prévoyant de préférence que la planification d'itinéraire du système de navigation (43) est modifiée automatiquement au moyen du dispositif de régulation et/ou de commande (39) en tenant compte de la période définie et/ou de la portion de parcours définie.

6. Arrangement pour assister un conducteur d'un véhicule, notamment d'un véhicule utilitaire, l'arrangement possédant au moins un bandage de véhicule (3), notamment configuré en tant que bandage pneumatique, au moins un capteur de température (17) étant présent, au moyen duquel peut être mesurée une température du bandage de véhicule (3), l'arrangement possédant un dispositif d'indication (41), notamment visuel et/ou sonore, au moyen duquel des informations à propos de l'état du bandage de véhicule (3) peuvent être indiquées au conducteur du véhicule (1), et l'arrangement possédant un dispositif de régulation et/ou de commande (39) relié avec transmission de signal au capteur de température (17), au moyen duquel peut être commandée et/ou régulée l'indication du dispositif d'indication (41), **caractérisé en ce que** le dispositif de régulation et/ou de commande (39) peut être commuté en plusieurs niveaux d'alerte, de telle sorte
que dans la mesure où au moins une valeur de température mesurée au moyen du capteur de température (17) dépasse une première valeur limite (T_{G1}) définie, le dispositif de régulation et/ou de commande (39) peut commuter automatiquement dans un premier niveau d'alerte dans lequel il peut être indiqué au conducteur, au moyen du dispositif d'indication (41), qu'il doit arrêter le véhicule (1) au sein d'une période définie et/ou au sein d'une portion de parcours définie et/ou qu'il ne doit pas dépasser une valeur de vitesse définie avec le véhicule (1), et
que dans la mesure où la valeur de température mesurée dépasse une deuxième valeur limite (T_{G2}) définie, configurée supérieure à la première valeur limite (T_{G1}) définie, le dispositif de régulation et/ou de commande (39) peut commuter automatiquement dans un deuxième niveau d'alerte dans lequel il peut être indiqué au conducteur, au moyen du dispositif d'indication (41), qu'il doit arrêter le véhicule (1) immédiatement.

7. Arrangement selon la revendication 6, **caractérisé en ce que** le capteur de température (17) est connecté avec transmission de signal au dispositif de régulation et/ou de commande (39) au moyen d'un dispositif de transmission de signal (29) sans fil, un dispositif d'émission (27) du dispositif de transmission de signal (29) étant associé au capteur de température (17), au moyen duquel le signal de mesure du capteur de température (17) peut être communiqué à un dispositif de réception (37) du dispositif de transmission de signal (29) associé au dispositif de régulation et/ou de commande (39).

8. Arrangement selon la revendication 7, **caractérisé en ce que** le capteur de température (17) possède au moins un élément de contact de capteur (19), lequel peut être relié avec transmission de signal à au moins un élément de contact d'émetteur (35) du dispositif d'émission (27) correspondant à l'élément de contact de capteur (19) en vue de la liaison avec transmission de signal du capteur de température (17) et du dispositif d'émission (27), en prévoyant de préférence qu'en vue de la liaison avec transmission de signal de l'élément de contact de capteur (19) et de l'élément de contact d'émetteur (35), l'élément de contact de capteur (19) est en appui avec l'élément de contact d'émetteur (35).

9. Arrangement selon la revendication 8, **caractérisé en ce que** l'au moins un élément de contact de capteur (19) est réalisé en forme de barre et/ou **en ce que** l'au moins un élément de contact de capteur (19) est réalisé en forme d'anneau et/ou en forme de plaque.

10. Arrangement selon la revendication 8 ou 9, **caractérisé en ce qu'**en vue de la liaison avec transmission de signal de l'élément de contact de capteur (19) et de l'élément de contact d'émetteur (35), l'élément de contact de capteur (19) n'est pas en appui avec l'élément de contact d'émetteur (35), un dispositif de transmission de signal (31) étant prévu, au moyen duquel l'élément de contact de capteur (19) et l'élément de contact d'émetteur (35) peuvent être reliés ensemble avec transmission de signal.

11. Arrangement selon l'une des revendications 7 à 10, **caractérisé en ce que** le dispositif d'émission (27) est disposé en dehors d'un espace creux (21) rempli d'air du bandage de véhicule (3) configuré en tant que bandage pneumatique, en prévoyant de préférence que l'élément de contact de capteur (19) est également disposé en dehors de l'espace creux (21).

12. Arrangement selon l'une des revendications 7 à 11, **caractérisé en ce qu'**un dispositif de calage est présent, au moyen duquel le dispositif d'émission (27) est fixé à une valve à air (7) du bandage de véhicule (3) configuré en tant que bandage pneumatique, en prévoyant de préférence que le dispositif d'émission (27) fixé enveloppe la valve à air (7) en forme d'anneau au moins par zones, notamment avec une distance d'écart définie.

13. Arrangement selon la revendication 12, **caractérisé en ce que** le dispositif de calage possède au moins un élément de serrage (51) au moyen duquel le dispositif d'émission (27) peut être serré et/ou pressé contre une butée (49) côté valve à air, en prévoyant de préférence que l'élément de serrage (51) est formé par un élément de fixation qui peut être vissé sur la valve à air (7), notamment par un écrou à visser.

14. Arrangement selon l'une des revendications 6 à 13, **caractérisé en ce que** le capteur de température (17) est fixé à une valve à air (7) du bandage de véhicule (3) configuré en tant que bandage pneumatique, ne prévoyant de préférence que le capteur de température (17) est fixé à la valve à air (7) de telle sorte que la température, notamment la température de l'air, dans un espace creux (21) rempli d'air du bandage de véhicule (3) peut être mesurée au moyen de celui-ci.

15. Arrangement selon la revendication 13, **caractérisé en ce que** le capteur de température (17) est incorporé par vulcanisation au moins dans certaines zones dans la valve à air (7), en prévoyant de préférence que l'au moins un élément de contact de capteur (19) et/ou une zone de mesure du capteur de température (17) est dégagé vers l'extérieur et/ou fait saillie depuis la valve à air (7) en vue de mesurer la température du bandage.

16. Valve à air sur un bandage de véhicule configuré en tant que bandage pneumatique, un capteur de température (17) étant fixé à la valve à air (7), de sorte que le capteur de température (17) et la valve à air (7) forment une unité structurale,
le capteur de température (17) étant fixé à la valve à air (7) de telle sorte que la température, notamment la température de l'air, dans un espace creux (21) rempli d'air du bandage de véhicule (3) peut être mesurée au moyen de celui-ci,
le capteur de température (17) pouvant être connecté avec transmission de signal à un dispositif de régulation et/ou de commande (39) au moyen d'un dispositif de transmission de signal (29) sans fil,
un dispositif d'émission (27) du dispositif de transmission de signal (29) étant associé au capteur de température (17), au moyen duquel le signal de mesure du capteur de température (17) peut être communiqué à un dispositif de réception (37) du dispositif de transmission de signal (29) associé au dispositif de régulation et/ou de commande (39),
un dispositif de calage étant présent, au moyen duquel le dispositif d'émission (27) est fixé à la valve à air (7),
le dispositif de calage possédant au moins un élément de serrage (51) au moyen duquel le dispositif d'émission (27) peut être serré et/ou pressé contre une butée (49) côté valve à air,
**caractérisé en ce que** le capteur de température (17) est incorporé par vulcanisation au moins dans certaines zones dans la valve à air (7).

17. Véhicule, notamment véhicule utilitaire, comprenant un arrangement selon l'une des revendications 6 à 15 et/ou comprenant au moins une valve à air selon la revendication 16.
